# EUROPEAN PATENT APPLICATION

(11) **EP 4 693 680 A1**
(43) Date of publication of application: **11.02.2026**
(21) Application number: 24935270.9
(22) Date of filing: 12.12.2024
(51) Int. Cl.: H01M 50/367, H01M 50/233, H01M 50/204, H01M 50/249

(54) **BATTERY PACK AND VEHICLE INCLUDING SAME**

(30) Priority: 11.04.2024 KR 20240048905
(71) Applicant: LG Energy Solution, Ltd., Seoul 07335 (KR)
(72) Inventor: LEE, Jung-Hoon, Daejeon 34122 (KR); KIM, Soo-Youl, Daejeon 34122 (KR); JUNG, Hye-Mi, Daejeon 34122 (KR); HAN, Min-Hee, Daejeon 34122 (KR)
(74) Representative: Plasseraud IP
(86) International application number: PCT/KR2024/096853
(87) International publication number: WO 2025/216399

(57) **Abstract**

Disclosed is a battery pack and a vehicle including the same. The battery pack includes a plurality of battery modules in which a plurality of battery cells are stacked; a pack case in which the plurality of battery modules are accommodated; and a venting cover having a discharge path formed to discharge flame or gas generated from the battery cell and coupled to the pack case.

## Description

### TECHNICAL FIELD

This application is based on and claims priority from Korean Patent Application No. 10-2024-0048905, filed on April 11, 2024, with the Korean Intellectual Property Office, the disclosure of which is incorporated herein in its entirety by reference.

The present disclosure relates to a battery pack and a vehicle including the same, and more specifically, to a battery pack capable of evenly dispersing heat and smoothly discharging gas when a thermal event occurs, and a vehicle including the same.

### BACKGROUND ART

In general, a secondary battery refers to a battery that may be repeatedly charged and discharged, such as a lithium-ion battery, a lithium polymer battery, a nickel-cadmium battery, a nickel-hydrogen battery, or a nickel-zinc battery. A battery cell, which corresponds to the most basic secondary battery, may provide an output voltage of approximately 2.5 V to 4.2 V.

Recently, as these battery cells are applied to devices requiring high output voltage and large charging capacity, such as electric vehicles or ESS (Energy Storage Systems), a battery module configured by connecting a number of battery cells in series, parallel, or a combination of series and parallel, and a battery pack configured by connecting the battery modules again in series, parallel, or a combination of series and parallel, are widely used.

Lithium secondary batteries are currently in the spotlight due to their advantages such as high operating voltage and significantly high energy density. However, because they use organic electrolytes, overcharging of lithium secondary batteries may cause overcurrent and overheating, which may lead to explosion or ignition in severe cases.

Various types of secondary batteries may include a battery module that includes a module case capable of protecting battery cells and a plurality of battery cells stacked and inserted into the module case, and a battery pack that includes a plurality of battery modules.

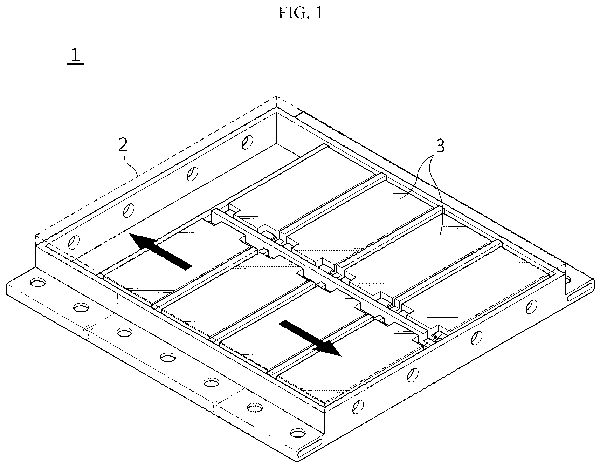

FIG. 1 is a perspective view showing a conventional battery pack.

Referring to FIG. 1, in the conventional battery pack 1, when a thermal event occurs, the flame or gas is blocked by the upper frame 2 of the battery pack 1 not to be easily discharged upward but to move to the left or right (see the arrows in FIG. 1). Thus, as the internal pressure increases, the possibility of explosion of the battery module 3 or the battery pack 1 increases.

At this time, if explosion occurs in the battery module 2 in which a flame is generated, flame may be propagated to another battery module 2 to cause a thermal runaway phenomenon, and if the flame leaks to the outside due to the thermal runaway phenomenon, there is a problem that the driver of the electric vehicle may be burned or put in a dangerous situation.

Alternatively, there is a problem in that the battery module 2 or the battery pack 1 is damaged or burned down by a chain reaction of flames caused by flame propagation, so it may be impossible to secure the stability of the battery module 2 or the battery pack 1.

### DISCLOSURE

### Technical Problem

The present disclosure is designed to solve the problems of the related art, and therefore the present disclosure is directed to providing a battery pack, which may prevent heat concentration or heat energy trapping by evenly dispersing the flame and the heat caused by the flame within the battery pack when a flame occurs in any one battery cell, thereby achieving uniform thermal distribution, and a vehicle including the same.

In addition, the present disclosure is directed to providing a battery pack in which venting is facilitated to easily discharge gas, and a vehicle including the same.

In addition, the present disclosure is directed to providing a battery module capable of preventing a thermal runaway phenomenon by preventing a flame chain reaction caused by flame propagation, and a battery pack and a vehicle including the same.

However, the technical problems to be solved by the present disclosure are not limited to the above, and other problems not mentioned herein will be clearly understood by those skilled in the art from the following description.

### Technical Solution

In one aspect of the present disclosure, there is provided a battery pack comprising: a plurality of battery modules in which a plurality of battery cells are stacked; a pack case in which the plurality of battery modules are accommodated; and a venting cover having a discharge path formed to discharge flame or gas generated from the battery cell and coupled to the pack case.

In an embodiment, the pack case may include an upper frame, a movement hole through which the flame or gas moves may be formed in the upper frame, and the venting cover may be coupled to an upper side of the upper frame.

In an embodiment, the venting cover may be formed to have a hollow therein to allow the flame or gas to move.

In an embodiment, a connection hole may be formed in the venting cover, and the battery module may be connected to the connection hole.

In an embodiment, the battery module may include an upper module case, a discharge hole through which the flame or gas is discharged may be formed in the upper module case, and the discharge hole may be connected to the discharge path of the venting cover.

In an embodiment, the battery pack may further comprise a connection unit configured to connect the discharge hole and the discharge path.

In an embodiment, the connection unit may be configured as a gasket or a sealing member that prevents the flame or gas from escaping.

In an embodiment, the battery pack may further comprise a backflow prevention member is installed on the venting cover to prevent backflow of the flame or gas.

In an embodiment, the backflow prevention member may be configured to rotate by the flame or gas.

In an embodiment, the backflow prevention member may include a rotary shaft coupled to an upper side of the venting cover; and a first opening/closing portion rotatably coupled to the rotary shaft and in contact with a lower side of the venting cover.

In an embodiment, the backflow prevention member may include a projection projecting from the venting cover; an elastic portion coupled to the projection; and a second opening/closing portion coupled to the elastic portion.

In an embodiment, the projection may include a first projection projecting from an upper side of the venting cover; and a second projection projecting from a lower side of the venting cover at a position corresponding to a position of the first projection and spaced apart from the first projection by a preset interval.

In an embodiment, the elastic portion may include a first elastic portion coupled to the first projection; and a second elastic portion coupled to the second projection.

In an embodiment, the battery pack may further comprise a path expansion member installed on the venting cover to expand a discharge path of the flame or gas.

In an embodiment, the path expansion member may include at least one first protrusion protruding from a first portion of the venting cover; and at least one second protrusion protruding from a second portion of the venting cover, and the first protrusion and the second protrusion may be arranged in a zigzag pattern.

In an embodiment, the path expansion member may include at least one first protrusion protruding from a first portion of the venting cover; and at least one second protrusion protruding from a second portion of the venting cover, the first protrusion may be arranged to be inclined toward the second portion, and the second protrusion may be arranged to be inclined toward the first portion.

Meanwhile, according to another aspect of the present disclosure, there may be provided a vehicle including at least one battery pack described above.

### Advantageous Effects

The embodiments of the present disclosure have the effect of preventing heat concentration or heat energy trapping by evenly dispersing the flame and the heat caused by the flame within the battery pack when a flame occurs in any one battery cell, thereby achieving uniform thermal distribution.

In addition, the present disclosure has the effect of facilitating venting and allowing gas to be discharged easily.

In addition, the present disclosure has the effect of preventing a thermal runaway phenomenon by preventing flame chain reaction caused by flame propagation.

The accompanying drawings illustrate a preferred embodiment of the present disclosure and together with the foregoing disclosure, serve to provide further understanding of the technical features of the present disclosure, and thus, the present disclosure is not construed as being limited to the drawing.

### DESCRIPTION OF DRAWINGS

FIG. 1 is a perspective view showing a conventional battery pack.
FIG. 2 is a perspective view showing a battery pack according to the first embodiment of the present disclosure as a whole.
FIG. 3 is an exploded perspective view showing the battery pack according to the first embodiment of the present disclosure.
FIG. 4 is a cross-sectional view taken along line A-A' of FIG. 2.
FIG. 5 is an enlarged view showing a part B of FIG. 3.
FIG. 6 is a drawing showing a connection unit connected to a battery module of FIG. 5.
FIG. 7 is a cross-sectional view showing a battery pack according to the second embodiment of the present disclosure.
FIG. 8 is a cross-sectional view showing a battery pack according to the third embodiment of the present disclosure.
FIG. 9 is a plan view showing a battery pack according to the fourth embodiment of the present disclosure, of which only a portion is shown.
FIG. 10 is a plan view showing a battery pack according to the fifth embodiment of the present disclosure, of which only a portion is shown.
FIG. 11 is a drawing for illustrating a vehicle including the battery pack according to each embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

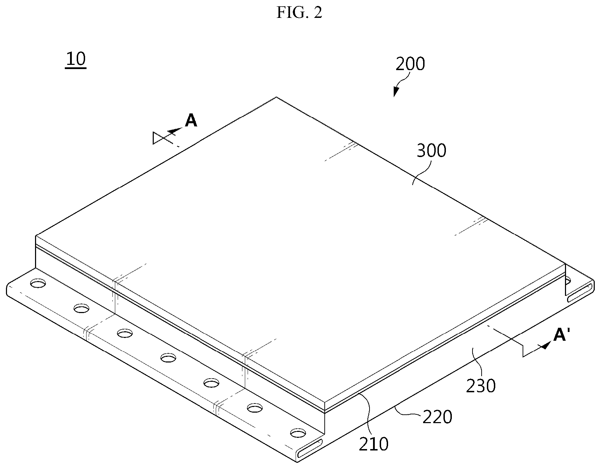

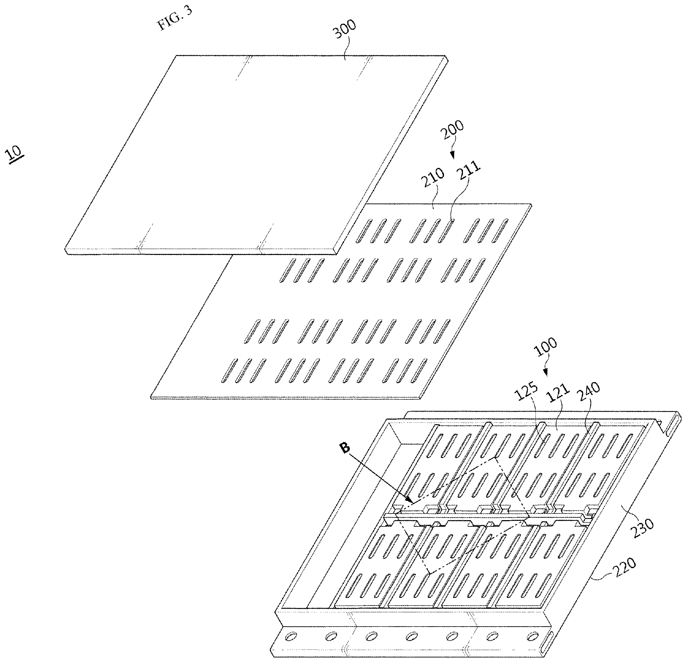

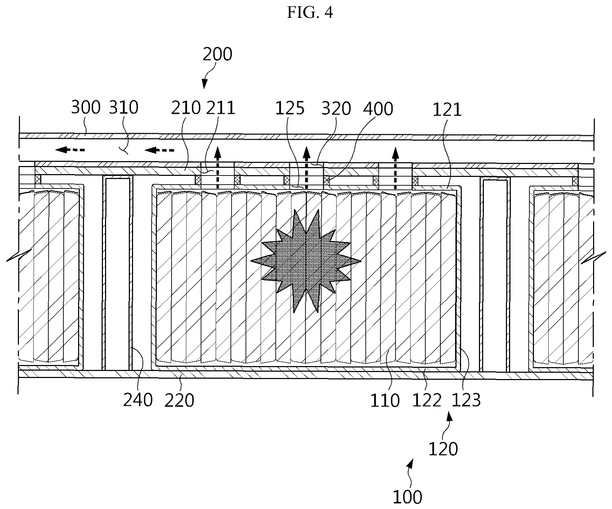

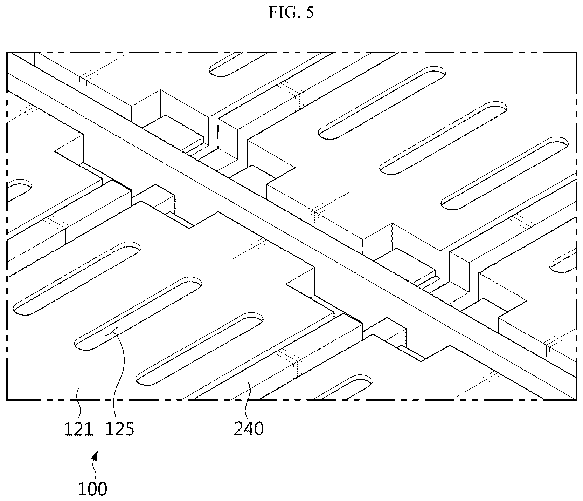

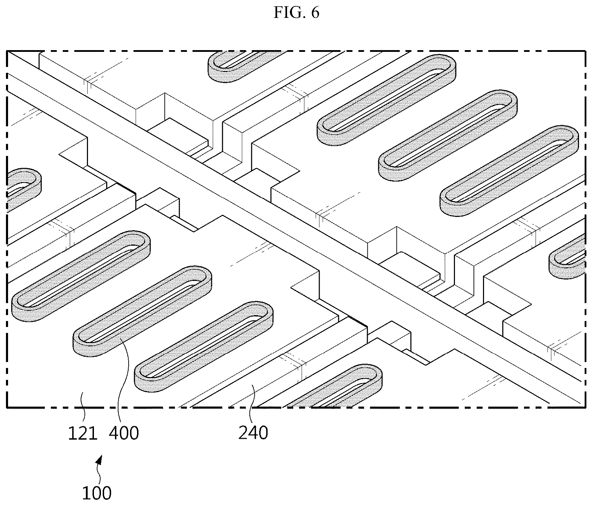

FIG. 2 is a perspective view showing a battery pack according to the first embodiment of the present disclosure as a whole, FIG. 3 is an exploded perspective view showing the battery pack according to the first embodiment of the present disclosure, FIG. 4 is a cross-sectional view taken along line A-A' of FIG. 2, FIG. 5 is an enlarged view showing a part B of FIG. 3, and FIG. 6 is a drawing showing a connection unit connected to a battery module of FIG. 5.

Referring to FIGS. 2 to 4, the battery pack 10 according to an embodiment of the present disclosure may include a plurality of battery modules 100, a pack case 200, and a venting cover 300.

The battery module 100 may be provided in plurality, and the plurality of battery cells 110 may be arranged in various ways. For example, as in FIG. 3, the battery modules 100 may be arranged in a horizontal direction and a vertical direction, but are not limited thereto.

Referring to FIG. 4, the battery module 100 may have a plurality of battery cells 110 and a module case 120.

The plurality of battery cells 110 may be stacked. The battery cells 110 may have various structures, and further, the plurality of battery cells 110 may be stacked in various ways.

The battery cell 110 may have a structure in which a plurality of unit cells, in each of which a positive electrode plate, a separator and a negative electrode plate are arranged in the order, or a plurality of bi-cells, in each of which a positive electrode plate, a separator, a negative electrode plate, a separator, a positive electrode plate, a separator and a negative electrode plate are arranged in the order, are stacked according to the battery capacity.

The battery cell 110 may be equipped with an electrode lead. The electrode lead is a type of terminal that is exposed to the outside and connected to an external device, and a conductive material may be used. The electrode lead may include a positive electrode lead and a negative electrode lead.

The positive electrode lead and the negative electrode lead may be arranged in opposite directions with respect to the longitudinal direction of the battery cell 110, or the positive electrode lead and the negative electrode lead may be arranged in the same direction with respect to the longitudinal direction of the battery cell 110.

The battery cell 110 may be provided with a plurality of cartridges (not shown) that accommodate the battery cells 110. Each cartridge (not shown) may be manufactured by injection molding of plastic, and a plurality of cartridges (not shown) having an accommodation portion that accommodates the battery cells 110 may be stacked. A cartridge assembly in which a plurality of cartridges (not shown) are stacked may be provided with a connector element or a terminal element.

The connector element may include various types of electrical connection components or connecting members for connection to, for example, a BMS (Battery Management System, not shown) that may provide data on the voltage or temperature of the battery cell 110.

Also, the terminal element is a main terminal connected to the battery cell 110 and includes a positive electrode terminal and a negative electrode terminal. The terminal element is equipped with a terminal bolt so that the terminal element may be electrically connected to the outside. Meanwhile, the battery cell 110 may have various shapes.

Referring to FIG. 4, the plurality of battery cells 110 are stacked and accommodated in the module case 120. The module case 120 surrounds the plurality of battery cells 110, thereby protecting the battery cells 110 from external vibrations or shocks.

The module case 120 may be formed in a shape corresponding to the shape of the stack in which a plurality of battery cells 110 are stacked. For example, if the stack in which a plurality of battery cells 110 are stacked is formed in a hexahedral shape, the module case 120 may also be formed in a hexahedral shape corresponding thereto, but the present disclosure is not limited thereto. Here, the module case 120 may include an upper module case 121, a lower module case 122, and a side module case 123.

In addition, the module case 120 may be formed by, for example, bending a metal plate, whereby the module case 120 may be manufactured in an integral form. If the module case 120 is manufactured in an integral form, the coupling process may become easy and simple. Alternatively, the module case 120 may be provided in a separate form and coupled by welding, etc. However, the material of the module case 120 is not limited to a metal material.

Referring to FIGS. 3 and 4, a plurality of battery modules 100 are accommodated in the pack case 200. The pack case 200 may include, for example, an upper frame 210, a lower frame 220, a side frame 230, and a barrier frame 240.

Referring to FIG. 2, the venting cover 300 is coupled to the upper frame 210. Here, referring to FIGS. 3 and 4, a movement hole 211 through which a flame or gas moves may be formed in the upper frame 210. The movement hole 211 of the upper frame 210 may be communicated with the connection hole 320 of the venting cover 300.

The lower frame 220 is configured such that the plurality of battery modules 100 are placed thereon. The lower frame 220 may be formed in a rectangular plate shape, but is not limited thereto. The lower frame 220 forms the bottom of the pack case 200.

The side frame 230 may be configured to extend upward from an edge of the lower frame 220. The side frame 230 defines the height of the pack case 200 and forms a preset space between the side frame 230 and the lower frame 220.

In addition, the plurality of battery modules 100 are placed in the space between the side frame 230 and the lower frame 220. The side frame 230 may include a long side frame with a relatively long length and a short side frame with a relatively short length. Alternatively, the lengths of the side frames 230 may all be the same.

The barrier frame 240 extends upward within the lower frame 220 and is coupled to the side frame 230. One or more barrier frames 240 may be provided, and the battery module 100 may be arranged between the plurality of barrier frames 240 or between the barrier frame 240 and the side frame 230. Here, the barrier frame 240 may be arranged in a horizontal or vertical direction within the side frame 230.

The venting cover 300 is coupled to the pack case 200. For example, referring to FIG. 2, the venting cover 300 may be coupled to the upper side of the upper frame 210 of the pack case 200. Also, referring to FIG. 4, a discharge path 310 through which a flame or gas generated from a battery cell 110 may be discharged is formed in the venting cover 300.

Referring to FIG. 4, the venting cover 300 may be formed to have a hollow therein, and the hollow inside the venting cover 300 may have the function of a discharge path 310. In addition, the flame or gas generated from the battery cell 110 may move through the hollow inside the venting cover 300.

Here, the flame or gas may be configured to move only in one direction of the venting cover 300, or may be configured to move in both directions of the venting cover 300.

Referring to FIG. 4, a connection hole 320 may be formed in the venting cover 300, the battery module 100 may be connected to the connection hole 320, and a flame or gas generated from a battery cell 110 may move to the hollow inside the venting cover 300 through the connection hole 320.

Specifically, as described above, the module case 120 of the battery module 100 may include an upper module case 121, and referring to FIG. 5, a discharge hole 125 through which a flame or gas may be discharged may be formed in the upper module case 121. In addition, the discharge hole 125 may be connected to the discharge path 310 of the venting cover 300 in various ways.

For example, referring to FIGS. 4, 5, and 6 together, the discharge hole 125 formed in the upper module case 121, the movement hole 211 formed in the upper frame 210, and the connection hole 320 formed in the venting cover 300 are communicated with each other and may be connected through the connection unit 400.

That is, the connection unit 400 connects the discharge hole 125 and the discharge path 310 by connecting the discharge hole 125, the movement hole 211, and the connection hole 320, thereby allowing the flame or gas to move to the discharge path 310 through the connection unit 400.

The connection unit 400 may be configured in various ways, and for example, may be configured as a gasket or a sealing member that prevents flame or gas from escaping. That is, in this case, the connection unit 400 has not only a sealing function that prevents flame or gas from escaping, but also a function of connecting the discharge hole 125, the movement hole 211, and the connection hole 320.

However, without being limited to the above, the connection unit 400 may be made of various materials and configured to form a connecting passage through which a flame or gas may move.

Referring to FIG. 4, flame or gas generated from battery cell 110 inside battery module 100 is discharged to the outside of the module case 120 through the discharge hole 125, and moves to the discharge path 310 inside the venting cover 300 through the connection unit 400 that connects the discharge hole 125, the movement hole 211, and the connection hole 320.

In addition, as described above, a hollow discharge path 310 may be formed inside the venting cover 300, so that a flame or gas that has moved into the venting cover 300 through the connection unit 400 and the connection hole 320 may move along the discharge path 310 inside the venting cover 300 and be discharged.

In this manner, when a flame is generated from one battery cell 110, the flame inside the battery pack 10 and the heat caused by the flame are evenly dispersed along the discharge path 310 inside the venting cover 300, thereby preventing heat concentration or heat energy trapping and also having the effect of achieving a uniform thermal distribution.

In addition, the venting through the discharge path 310 of the venting cover 300 is made smooth, so that gas may be easily discharged.

In addition, there is the effect of preventing a thermal runaway phenomenon by preventing flame chain reaction due to flame propagation.

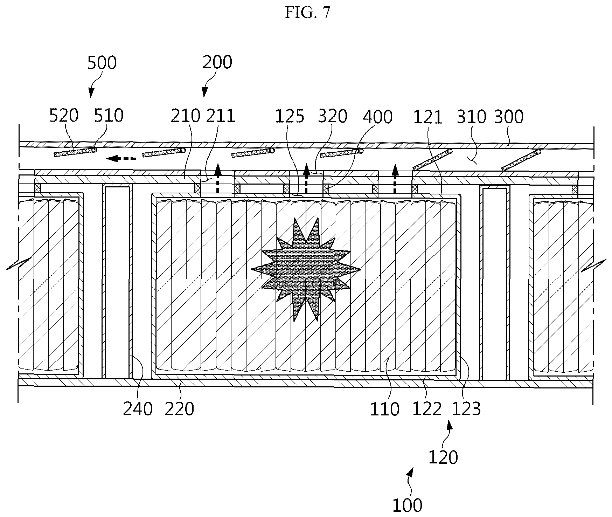

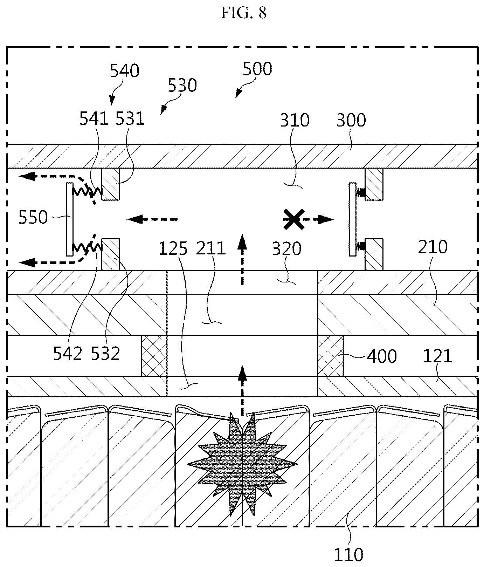

FIG. 7 is a cross-sectional view showing a battery pack according to the second embodiment of the present disclosure, and FIG. 8 is a cross-sectional view showing a battery pack according to the third embodiment of the present disclosure.

The second embodiment and the third embodiment of the present disclosure are structurally different from the first embodiment in that a backflow prevention member 500 is provided. However, any feature of the second embodiment or the third embodiment that is common to the first embodiment will not be described in detail again. In addition, any feature of the second embodiment or the third embodiment that is applicable to the first embodiment may be applied to the first embodiment.

The backflow prevention member 500 is installed inside the venting cover 300 to prevent backflow of flame or gas. Here, the backflow prevention member 500 may be configured in various ways, and for example, may be configured to rotate by flame or gas. However, the present disclosure is not limited thereto.

Referring to FIG. 7, the backflow prevention member 500 may include a rotary shaft 510 and a first opening/closing portion 520. The rotary shaft 510 may be coupled to an upper side inside the venting cover 300. In addition, the first opening/closing portion 520 is rotatably coupled to the rotary shaft 510 and is in contact with the lower side of the venting cover 300. The first opening/closing portion 520 may be configured to contact the venting cover 300 at the lower side on the left side of the rotary shaft 510 as shown in FIG. 7, but is not limited thereto, and the contact position may be changed depending on the direction of movement of the gas.

Referring to FIG. 7, when gas moves from right to left (see arrow) based on FIG. 7, the first opening/closing portion 520 is opened by rotation based on the rotary shaft 510. Also, the gas may move from right to left and be discharged. However, after the gas passes through the first opening/closing portion 520, the first opening/closing portion 520 is closed by rotation due to gravity, thereby preventing the gas from moving in a reverse direction.

Referring to FIG. 8, the backflow prevention member 500 may include a projection 530, an elastic portion 540, and a second opening/closing portion 550.

The projection 530 projects from the venting cover 300. For example, the projection 530 may include a first projection 531 and a second projection 532, where the first projection 531 projects from an upper side of the venting cover 300 and the second projection 532 projects from a lower side of the venting cover 300. Here, the second projection 532 may be configured to be spaced apart from the first projection 531 by a preset interval at a position corresponding to a position of the first projection 531.

In addition, the elastic portion 540 is coupled to the projection 530. The elastic portion 540 may include a first elastic portion 541 and a second elastic portion 542, where the first elastic portion 541 may be coupled to the first projection 531, and the second elastic portion 542 may be coupled to the second projection 532.

Also, the second opening/closing portion 550 is coupled to the elastic portion 540, that is, the first elastic portion 541 and the second elastic portion 542, respectively, as in FIG. 8.

In this configuration, when gas moves from right to left (see arrow) based on FIG. 8, the second opening/closing portion 550 is opened. Also, the gas may move from right to left based on FIG. 8 in the direction of the arrow and be discharged. However, after the gas passes through the second opening/closing portion 550, the second opening/closing portion 550 is closed by the elastic force of the elastic portion 540, thereby preventing the gas from moving in a reverse direction.

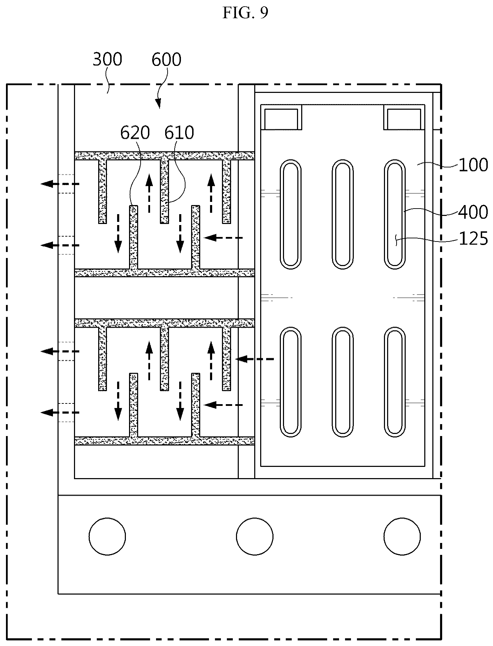

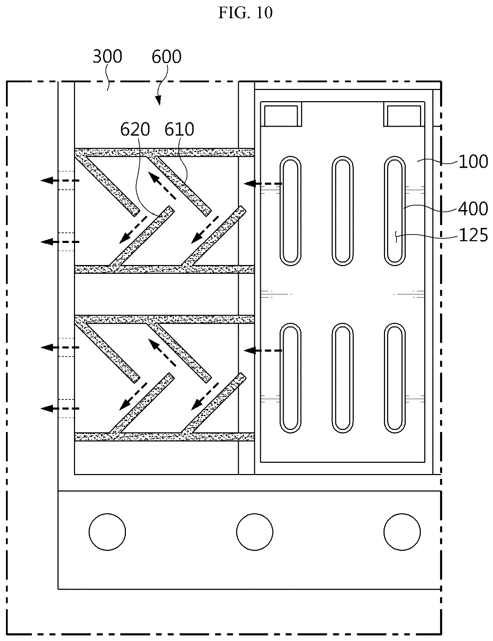

FIG. 9 is a plan view showing a battery pack according to the fourth embodiment of the present disclosure, of which only a portion is shown, and FIG. 10 is a plan view showing a battery pack according to the fifth embodiment of the present disclosure, of which only a portion is shown.

The fourth embodiment and the fifth embodiment of the present disclosure are structurally different from other embodiments in that a path expansion member 600 is provided. However, any feature of the fourth embodiment or the fifth embodiment that is common to other embodiments will not be described in detail again. In addition, any feature of the fourth embodiment or the fifth embodiment that is applicable to other embodiments may be applied to other embodiments.

The path expansion member 600 is installed in the hollow inside the venting cover 300 to expand the discharge path of the flame or gas. That is, the path expansion member 600 lengthens the path of movement of the flame or gas so that the temperature of the flame or high-temperature gas (or high-temperature spark, etc.) may drop or be extinguished while moving.

Referring to FIG. 9, the path expansion member 600 may include at least one first protrusion 610 and at least one second protrusion 620. Here, at least one first protrusion 610 protrudes from a first portion of the venting cover 300. Also, at least one second protrusion 620 protrudes from a second portion of the venting cover 300.

Here, the first protrusion 610 and the second protrusion 620 may be arranged in a zigzag pattern relative to each other, and there is an effect of lowering the temperature while the flame or gas moves in a zigzag pattern between the first protrusion 610 and the second protrusion 620 (see the arrows in FIG. 9).

Referring to FIG. 10, the path expansion member 600 may include at least one first protrusion 610 and at least one second protrusion 620. Here, at least one first protrusion 610 protrudes from a first portion of the venting cover 300. Also, at least one second protrusion 620 protrudes from a second portion of the venting cover 300.

Here, the first protrusion 610 is arranged to be inclined toward the second portion, and also the second protrusion 620 is arranged to be inclined toward the first portion. This has the effect of lowering the temperature while the flame or gas moves obliquely between the first protrusion 610 and the second protrusion 620 (see arrows in FIG. 10).

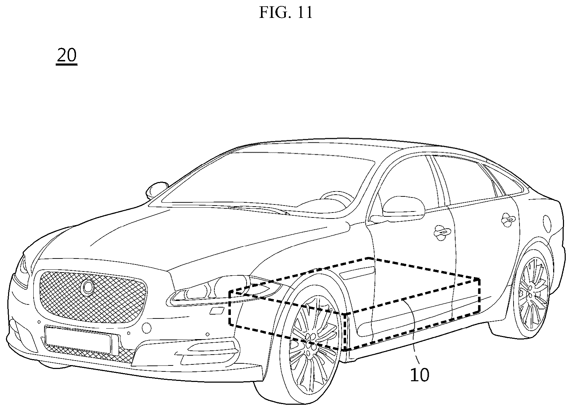

FIG. 11 is a drawing for illustrating a vehicle including the battery pack according to each embodiment of the present disclosure.

Referring to FIG. 11, the vehicle 20 according to an embodiment of the present disclosure may include one or more battery packs 10 according to each of the embodiments described above. Here, the vehicle 20 includes various vehicles that are designed to use electricity, such as an electric vehicle or a hybrid electric vehicle.

When the terms indicating directions as used herein such as upper, lower, left, and right are used for convenience of description only, these terms are just for convenience of explanation, and it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description. Therefore, the previously disclosed embodiments should be considered from an explanatory perspective rather than a limiting perspective. In other words, the scope of the true technical idea of the present disclosure is shown in the claims, and all differences within the scope of equivalence should be interpreted as being included in the present disclosure.

### INDUSTRIAL APPLICABILITY

The present disclosure relates to a battery pack and a vehicle including the same, and is particularly applicable to industries related to secondary batteries.

## Claims

1. A battery pack comprising:
a plurality of battery modules in which a plurality of battery cells are stacked;
a pack case in which the plurality of battery modules are accommodated; and
a venting cover having a discharge path formed to discharge flame or gas generated from the battery cell and coupled to the pack case.

2. The battery pack according to claim 1,
wherein the pack case includes an upper frame,
wherein a movement hole through which the flame or gas moves is formed in the upper frame, and
wherein the venting cover is coupled to an upper side of the upper frame.

3. The battery pack according to claim 2,
wherein the venting cover is formed to have a hollow therein to allow the flame or gas to move.

4. The battery pack according to claim 3,
wherein a connection hole is formed in the venting cover, and
wherein the battery module is connected to the connection hole.

5. The battery pack according to claim 1,
wherein the battery module includes an upper module case, and
wherein a discharge hole through which the flame or gas is discharged is formed in the upper module case, and the discharge hole is connected to the discharge path of the venting cover.

6. The battery pack according to claim 5, further comprising:
a connection unit configured to connect the discharge hole and the discharge path.

7. The battery pack according to claim 6,
wherein the connection unit is configured as a gasket or a sealing member that prevents the flame or gas from escaping.

8. The battery pack according to claim 1, further comprising:
a backflow prevention member is installed on the venting cover to prevent backflow of the flame or gas.

9. The battery pack according to claim 8,
wherein the backflow prevention member is configured to rotate by the flame or gas.

10. The battery pack according to claim 9,
wherein the backflow prevention member includes:
a rotary shaft coupled to an upper side of the venting cover; and
a first opening/closing portion rotatably coupled to the rotary shaft and in contact with a lower side of the venting cover.

11. The battery pack according to claim 8,
wherein the backflow prevention member includes:
a projection projecting from the venting cover;
an elastic portion coupled to the projection; and
a second opening/closing portion coupled to the elastic portion.

12. The battery pack according to claim 11,
wherein the projection includes:
a first projection projecting from an upper side of the venting cover; and
a second projection projecting from a lower side of the venting cover at a position corresponding to a position of the first projection and spaced apart from the first projection by a preset interval.

13. The battery pack according to claim 12,
wherein the elastic portion includes:
a first elastic portion coupled to the first projection; and
a second elastic portion coupled to the second projection.

14. The battery pack according to claim 1, further comprising:
a path expansion member installed on the venting cover to expand a discharge path of the flame or gas.

15. The battery pack according to claim 14,
wherein the path expansion member includes:
at least one first protrusion protruding from a first portion of the venting cover; and
at least one second protrusion protruding from a second portion of the venting cover,
wherein the first protrusion and the second protrusion are arranged in a zigzag pattern.

16. The battery pack according to claim 14,
wherein the path expansion member includes:
at least one first protrusion protruding from a first portion of the venting cover; and
at least one second protrusion protruding from a second portion of the venting cover,
wherein the first protrusion is arranged to be inclined toward the second portion, and
wherein the second protrusion is arranged to be inclined toward the first portion.

17. A vehicle comprising the battery pack according to any one of claims 1 to 16.
